# EUROPEAN PATENT SPECIFICATION

(11) **EP 1 424 867 B1**
(45) Date of publication and mention of the grant of the patent: **30.06.2010**
(21) Application number: 03027330.4
(22) Date of filing: 26.11.2003
(51) Int. Cl.: H04W 36/14, H04W 88/06, H04W 36/30

(54) **Method of handover in multimode telecommunication network**
Handover-Verfahren im Telekommunikationsnetzwerk mit mehreren Betriebsmodi
Procédé de transfert intercellulaire dans un réseau de télécommunication multimode

(30) Priority: 29.11.2002 FR 0215032
(43) Date of publication of application: 02.06.2004
(73) Proprietor: NEC CORPORATION, Tokyo (JP)
(72) Inventor: Roberts, Michael, 92200 Neuilly Sur Seine (FR)
(74) Representative: Baronetzky, Klaus

(56) References cited:
- EP-A- 1 037 490
- WO-A-01/33869
- US-B1- 6 295 450

## Description

### BACKGROUND OF THE INVENTION:

### 1. Field of the Invention:

The invention is in the field of mobile telecommunications, and more specifically, it relates to a method of handover, that is intercellular transfer, in a multimode mobile telecommunication network in which, to initiate a handover, the network sends to a mobile terminal a first group of system information via a first channel associated with circuit switching services and a second group of system information a second channel associated with packet switching services.

More particularly, the invention is applied to a GSM (Global System of Mobile communication)/GPRS (General Packet.Service) - UMTS (Universal Mobile telephone service) dual mode terminal in a multimode network comprising GSM/GPRS cells and UMTS cells.

### 2. Description of the Related Art:

In a cellular network, a mobile terminal is connected to a particular cell of the network, which will be referred to as current cell in this description below.

To prepare for a handover, the network has to present the mobile terminal with a list of the neighboring cells in which the access technology is the same as the one implemented in the current cell, and also of the cells in which a different access technology is implemented.

The technical specifications of 3GPP (Third Generation Partnership Project) define for the GSM standard an unidirectional logical control channel on the downlink BCCH (Broadcast Control Channel) for sending the mobile terminal system information being broadcast in a cell.

This system information is called SYSTEM INFORMATION TYPE 2 (S12) in circuit switching networks and SYSTEM INFORMATION TYPE 5 (S15) in packet switching networks.

With the introduction of GPRS, a new unidirectional logical control channel on the downlink PBCCH (Packet Broadcast Control Channel) was defined to send to the mobile terminal various types of system information being broadcast in a cell. This system information contains among other things a list of frequencies of the neighboring cells in which measurements have to be performed.

For instance, US-B1-6 295 450 discloses a method of handover (i.e., intercellular transfer) in a multimode mobile telecommunication network in which, to initiate a handover, the network sends to a mobile terminal a first group of system information via a circuit switching channel and a second group of system information via a packet switching channel. The circuit switching channel is a channel associated with circuit switching services and the packet switching channel is a channel associated with packet switching services.

In the prior art, when the terminal establishes communication with the network, a dedicated channel SDCCH (Slow Dedicated Control Channel) is allocated to the sending of system information.

However, a delay required for sending this information is relatively long (3 to 4 seconds). Consequently, success of a procedure of handover may be compromised since this procedure has to be achieved within a shorter delay especially in the case of saturation of the current cell.

This problem becomes aggravated by the fact that the current specifications of the 3GPP standard do not provide a procedure that permits the mobile terminal to send to the network the results of measurements performed on the basis of system information transmitted over an available PBCCH channel.

### SUMMARY OF THE INVENTION:

The object of the invention is to alleviate the disadvantages of the prior art described above.

The method according to the invention is defined in claim 1 and characterized by the step of:
a) allocating a bidirectional transport channel between the network and the mobile terminal for conveying data from the terminal and signalling information, after sending by the mobile terminal a request for connection to the network, and the further steps, carried out by the mobile terminal, of:
   b) performing measurements at least in one neighboring cell on the basis of information contained in the second group of system information,
   c) sending the network the measurements performed in step b), and
   d) initiating the handover according to the measurements performed in step b).

In a particular application of the invention, the measurements are performed in a neighboring cell of circuit switching (CS) type.

Preferably, the invention is applied in a GSM/GPRS dual mode network and in a UMTS network. In this case, the first channel is BCCH channel and the second channel is PBCCH channel.

The invention also relates to a mobile terminal defined in claim 7 which performs measurements for preparing for a handover in a mobile telecommunication network. This measurements depend either on a first group of system information sent by the network to the mobile terminal via a circuit switching channel or on a second group of system information sent by the network to the mobile terminal via a packet switching channel.

The mobile terminal according to the invention further comprises:
means for sending a request for connection to the network, the mobile terminal being subsequently arranged to convey data and signalling information over a bidirectional transport channel between the network and the mobile terminal, which is allocated after sending the request,
means for performing measurements at least in one neighboring cell on the basis of information contained in the second group of system information,
means for sending the network the measurements performed, and
means for initiating the procedure of handover according to the measurements performed.

According to the present invention, the procedure of handover is surely performed since the measurements performed in a neighboring cell on the basis of the system information are rapidly sent to the network.

Other characteristics and advantages of the invention will be apparent from the following description, made by way of non-limiting example, with reference to accompanying drawings.

### BRIEF DESCRIPTION OF THE DRAWINGS:

FIG. 1 is a view schematically illustrating the steps of the method according to the invention, and
FIG. 2 is a block diagram illustrating the mobile terminal according to the invention.

### DETAILED DESCRIPTION OF THE PREFERRED EMBODIMENTS:

In order to disclose the invention, the following description relates to an implementation of the method in a GSM/GPRS network in which a mobile terminal MS (for mobile station) is located in a saturated cell of the GSM network. Therefore, a procedure of handover regarding the mobile terminal from the saturated cell towards a cell comprising sufficient radio resources for continuing the communication has to be implemented. Measurements are performed for identifying a neighboring cell having the sufficient radio resources.

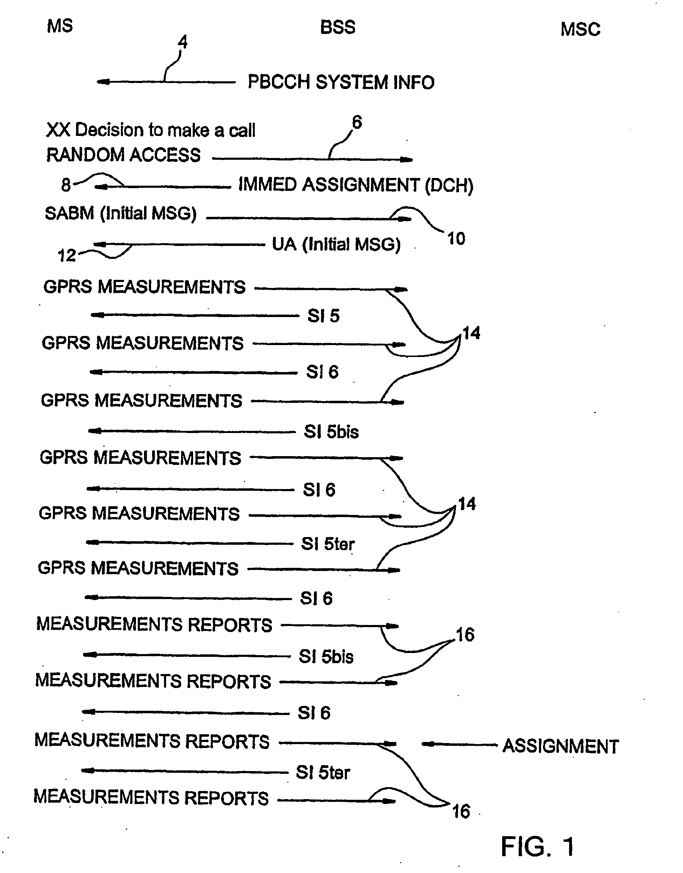

FIG. 1 describes the various steps of this procedure by indicating with arrows various information exchanged among the mobile terminal (MS), a base station system (BSS) and a mobile switching center (MSC).

In a known manner, the BSS access network sends, as indicated by arrow 4, mobile terminal MS a first list of frequencies with regard to the cells to be measured via the BCCH channel and second list of frequencies with regard to the cells to be measured via the PBCCH channel.

To establish the communication, the terminal sends, as indicated by arrow 6, to the BSS a request for connection to the network.

Upon receiving this request, the BSS immediately allocates, as indicated by arrow 8, to the terminal a bidirectional transport channel SDCCH that conveys data from the user of the terminal and signalling information. The terminal then exchanges initialization messages (Initial MSG) with the BSS as indicated by arrows 10 and 12.

Contrary to the procedure of handover in the prior art, the terminal immediately sends, as indicated by arrows 14 to the BSS GPRS measurements based on the system information sent via the PBCCH without waiting for the reception of the system information SI5 sent via the BCCH channel.

In the example shown in FIG.1, the terminal sends six reports of measurements as indicated by arrows 14 before measurements are carried out on the basis of the messages SI5. Therefore, the network may prepare for the handover as indicated by arrow 16 on the basis of nine reports of measurements based on GPRS system information and GSM system information.

The procedure of handover is notably improved taking into consideration the system information supplied to the terminal via the PBCCH to the extent that the decision to perform a handover is taken on the basis of nine measurement reports instead of three.

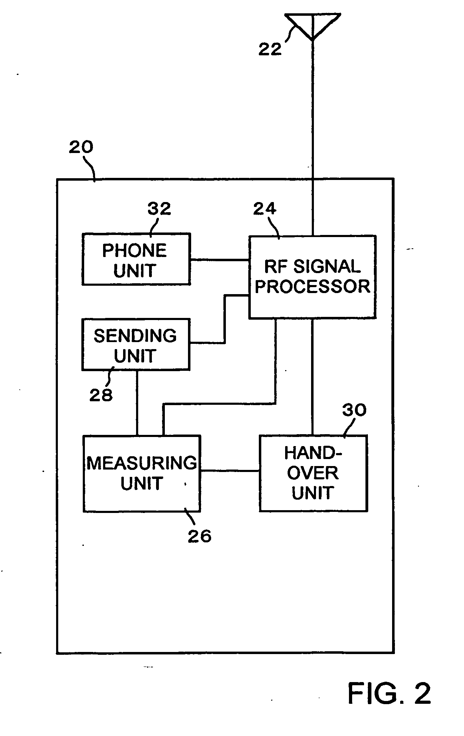

FIG. 2 shows an example of the mobile terminal according to the invention.

Mobile terminal 20 is used in a multimode mobile telecommunication network, and performs measurements for preparing for a handover in the network. The measurements depend either on a first group of system information sent by the network to mobile terminal 20 via a circuit switching channel or on a second group of system information sent by the network to the mobile terminal 20 via a packet switching channel. The mobile terminal has antenna 22, RF signal processor 24 connected to antenna 22, measuring unit 26 for performing measurements at least in one neighboring cell on the basis of information contained in the second group of system information, sending unit 28 for sending to the network the measurements performed in measuring unit 26, handover unit 30 for initiating the procedure of handover according to the measurements performed in measuring unit 26, and phone unit 32 which realizes general functions of a cellular phone such as dialling and voice communication. Each of measuring unit 26, sending unit 28, handover unit 30 and phone unit 32 is connected to RF signal processor 24.

While a preferred embodiment of the present invention has been described using specific terms, such description is for illustrative purposes only, and it is to be understood that changes and variations may be made without departing from the scope of the present invention as defined in the following claims.

## Claims

1. A method of handover in a multimode mobile telecommunication network in which, to initiate a handover, the network sends to a mobile terminal a first group of system information via a first channel associated with circuit switching services and a second group of system information via a second channel associated with packet switching services,
**characterized in that** the method comprises the step of:
a) allocating a bidirectional transport channel between the network and the mobile terminal for conveying data from the terminal and signalling information, after sending by the mobile terminal a request for connection to the network,
and the further steps, carried out by the mobile terminal, of:
b) performing measurements at least in one neighboring cell on a basis of information contained in the second group of system information,
c) sending to the network the measurements performed in step b), and
d) initiating the procedure of handover according to the measurements performed in step b) without waiting for reception of the first group of system information sent via the first channel.

2. The method according to claim 1, wherein decision to perform the handover is taken on the basis of measurement reports based on the second group system information and the first group of system information.

3. The method according to one of the claims 1 or 2, wherein the measurements are performed in a neighboring cell of circuit switching (CS) type.

4. The method according to one of the preceding claims, wherein the telecommunication network is a GSM/GPRS network, and wherein the first channel is a BCCH channel and the second channel is a PBCCH channel.

5. The method according to claim 4, wherein the mobile terminal is located in a saturated cell of the GSM network.

6. The method according to one of the claims 1 to 3, wherein the telecommunication network is an UMTS network.

7. A mobile terminal (20) used in a multimode mobile telecommunication network, the mobile terminal (20), which is capable for communication with the network via a bidirectional transport channel, being arranged to perform measurements for preparing for a handover in the network,
- wherein the mobile terminal (20) includes means for receiving a first group of system information sent by the network to the mobile terminal (20) via a circuit switching channel and a second group of system information sent by the network to the mobile terminal (20) via a packet switching channel, and
- wherein the mobile terminal (20) further comprises:
- means for sending a request for connection to the network, the mobile terminal being subsequently arranged to convey data and signalling information over a bidirectional transport channel between the network and the mobile terminal, which is allocated after sending the request,
- means (26) for performing measurements at least in one neighboring cell on a basis of information contained in the second group of system information,
- means (28) for sending to the network the measurements performed, and
- means (30) for initiating the procedure of handover according to the measurements performed without waiting for reception of the first group of system information sent via the first channel.

## Patentansprüche

1. Verfahren zur Leitungsilbergabe in einem Multimode-Mobiltelekommunikationsnetzwerk, in welchem das Netzwerk zur Einleitung bzw. Veranlassung einer Leitungsübergabe eine erste Gruppe von Systeminformationen über einen ersten Kanal an ein mobiles Endgerät sendet, wobei der erste Kanal einer Leitungsvermittlung bzw. einem leitungsorientierten Dienst zugehörig ist, und eine zweite Gruppe von Systeminformationen über einen zweiten Kanal sendet, welcher einer Paketvermittlung bzw. eine paketorientierten Dienst zugehörig ist,
**dadurch gekennzeichnet, dass** das Verfahren den folgenden Schritt aufweist:
a) Zuweisung eines bidirektionalen Transportkanals zwischen dem Netzwerk und dem mobilen Endgerät zur Übermittlung von Daten von dem Endgerät und Signalisierungsinformationen, nachdem eine Anfrage zur Verbindung mit Netzwerk von dem mobilen Endgerät gesendet worden ist;
und **gekennzeichnet durch** die folgenden weiteren Schritte, welche von dem mobilen Endgerät ausgeführt werden:
b) Durchführung von Messungen zumindest in einer Nachbarzelle auf der Basis von Informationen, welche in der zweiten Gruppe von Systeminformatione enthalten sind;
c) Senden der in Schritt b) durchgeführten Messungen an das Netzwerk; und
d) Einleitung des Leitungsübergabevorgangs gemäß den in Schritt b) durchgeführten Messungen, ohne dass der Empfang der über den ersten Kanal gesendeten ersten Gruppe von Systeminformationen abgewartet wird.

2. Verfahren nach Anspruch 1, **dadurch gekennzeichnet, dass** eine Entscheidung zur Durchführung der Leitungsübergabe auf der Basis von Messberichten basierend auf der zweiten Gruppe von Systeminformationen und der ersten Gruppe von Systeminformationen getroffen wird.

3. Verfahren nach einem der Ansprüche 1 oder 2, **dadurch gekennzeichnet, dass** die Messungen in einer Nachbarzelle von der Art Leitungsvermittlung (LV) durchgeführt werden.

4. Verfahren nach einem der vorhergehenden Ansprüche, **dadurch gekennzeichnet, dass** es sich bei dem Telekommunikationsnetzwerk um ein GSM/GPRS Netzwerk handelt, und dass der erste Kanal ein BCCH-Kanal und der zweite Kanal eine PBCCH-Kanal ist.

5. Verfahren nach Anspruch 4, **dadurch gekennzeichnet, dass** das mobile Endgerät in einer gesättigten bzw. nicht mehr aufnahmefähigen Zelle des GSM-Netzes angeordnet ist.

6. Verfahren nach einem der Ansprüche 1 bis 3, **dadurch gekennzeichnet, dass** das Telekommunikationsnetzwerk ein UTMS-Netzwerk ist.

7. Mobiles Endgerät (20), welches in einem Multimode-Mobiltelekommunikationsnetzwerk verwendet wird, wobei das mobile Engerät (20), welches zur Kommunikation mit dem Netzwerk über einen bidirektionalen Transportkanal in der Lage ist, derart angeordnet ist, dass es Messungen zur Vorbereitung einer Leitungsübergabe in dem Netzwerk durchführt,
wobei das mobile Endgerät (20) eine Vorrichtung aufweist, um eine von dem Netzwerk an das mobile Endgerät (20) über einen leitungsvermittelten Kanal gesendete erste Gruppe von Systeminformationen, und eine von den Netzwerk an das mobile Endgerät (20) über einen paketvermittelten Kanal gesendete zweite Gruppe von Systeminformationen zu empfangen: und
wobei das mobile Endgerät (20) des Weiteren Folgendes aufweist:
eine Vorrichtung zum Senden einer Verbindungsanfrage an das Netzwerk, wobei das mobile Endgerät anschließend derart angeordnet ist, dass es Daten und Signalisierungsinformationen über einen bidirektionalen Transportkanal zwischen dem Netzwerk und dem mobilen Endgerät, welches nach dem Senden der Anfrage zugewiesen wird, übermittelt;
eine Vorrichtung (26) zur Durchführung von Messungen zumindest in einer Nachbarzelle auf der Basis von Informationen, welche in der zweiten Gruppe von Systeminformationen enthalten sind;
eine Vorrichtung (28) zum Senden der durchgeführten Messungen an das Netzwerk; und
eine Vorrichtung (30) zur Einleitung des Leitungsübergabevorgangs gemäß den durchgeführten Messungen, ohne dass ein Empfang der über den ersten Kanal gesendeten ersten Gruppe von Systeminformationen abgewartet wird.

## Revendications

1. Procédé de transfert inter-cellulaire dans un réseau de télécommunication mobile multimode dans lequel, pour initier un transfert inter-cellulaire, le réseau envoie à un terminal mobile un premier groupe d'informations de système via un premier canal associé à des services de commutation de circuit et un second groupe d'informations de système via un second canal associé à des services de commutation de paquet,
**caractérisé en ce que** le procédé comprend l'étape consistant à :
a) attribuer un canal de transport bidirectionnel entre le réseau et le terminal mobile pour acheminer des données à partir du terminal et des informations de signalisation, après l'envoi par le terminal mobile d'une demande de connexion au réseau,
et les étapes supplémentaires, effectuées par le terminal mobile, consistant à :
b) effectuer des mesures au moins dans une cellule voisine sur la base d'informations contenues dans le second groupe d'informations de système,
c) envoyer au réseau les mesures effectuées à l'étape b), et
d) initier la procédure de transfert inter-cellulaire selon les mesures effectuées à l'étape b) sans attendre la réception du premier groupe d'informations de système envoyé via le premier canal.

2. Procédé selon la revendication 1, dans lequel la décision d'effectuer un transfert inter-cellulaire est prise sur la base des rapports de mesure fondés sur le second groupe d'informations de système et le premier groupe d'informations de système.

3. Procédé selon l'une des revendications 1 et 2, dans lequel les mesures sont effectuées dans une cellule voisine de type à commutation de circuit (CS).

4. Procédé selon l'une des revendications précédentes, dans lequel le réseau de télécommunications est un réseau GSM/GPRS, et dans lequel le premier canal et un canal BCCH et le second canal est un canal PBCCH.

5. Procédé selon la revendication 4, dans lequel le terminal mobile est situé dans une cellule saturée du réseau GSM.

6. Procédé selon l'une des revendications 1 à 3, dans lequel le réseau de télécommunications est un réseau UMTS.

7. Terminal mobile (20) utilisé dans un réseau de télécommunications mobile multimode, le terminal mobile (20), qui est capable d'une communication avec le réseau via un canal de transport bidirectionnel, étant agencé pour effectuer des mesures pour préparer un transfert inter-cellulaire dans le réseau, - dans lequel le terminal mobile (20) inclut un moyen pour recevoir un premier groupe d'informations de système envoyé par le réseau au terminal mobile (20) via un canal de commutation de circuit et un second groupe d'informations de système envoyé par le réseau au terminal mobile (20) via un canal de commutation de paquet, et
- dans lequel le terminal mobile (20) comprend en outre :
- un moyen pour envoyer une demande de connexion au réseau, le terminal mobile étant par la suite agencé pour acheminer des données et des informations de signalisation sur un canal de transport bidirectionnel entre le réseau et le terminal mobile, qui est attribué après l'envoi de la demande,
- un moyen (26) pour effectuer des mesures au moins dans une cellule voisine sur la base d'informations contenues dans le second groupe d'informations de système, - un moyen (28) pour renvoyer au réseau les mesures effectuées, et
- un moyen (30) pour initier la procédure de transfert selon les mesures effectuées sans attendre la réception du premier groupe d'informations de système envoyé via le premier canal.
